# EUROPEAN PATENT APPLICATION

(11) **EP 4 765 764 A1**
(43) Date of publication of application: **24.06.2026**
(21) Application number: 25224533.7
(22) Date of filing: 17.12.2025
(51) Int. Cl.: H04L 61/103, H04L 9/40, H04W 12/50

(54) **ACOUSTIC DEVICE NETWORKS FOR LAYOUT ESTIMATION**

(30) Priority: 18.12.2024 US 202418986610
(71) Applicant: Harman International Industries, Incorporated, Stamford, CT 06901 (US)
(72) Inventor: KUCUK, Abdullah, Novi, MI 48377 (US); GANGULY, Anshuman, Canton, MI 48188 (US); SRINIDHI, Kadagattur Gopinatha, Northville, MI 48168 (US); KOVALYOV, Anton, Farmington Hills, MI 48331 (US); BASTYR, Kevin J., Franklin, MI 48025 (US)
(74) Representative: Rummler, Felix

(57) **Abstract**

Methods and systems for configuring an acoustic device network are provided. In one example, a method comprises: connecting a first device (e.g., a mobile device with audio control software) and a second device (e.g., a primary audio device) to a network; transmitting a first audio signal with a third device (e.g., a secondary audio device), wherein the first audio signal is encoded with a network address of the third device. This first audio signal may be detected and the network address decoded on the second device; the second device may transmit a connection request to the first device; in response to a confirmation of connection received by the first device, a second audio signal may be transmitted with the second device, wherein the second audio signal is encoded with network credentials of the network; this second audio signal may be detected and the network credentials decoded with the third device.

## Description

### FIELD

The present disclosure relates to systems and methods for acoustic device networks.

### BACKGROUND

Setting up and connecting loudspeakers and estimating their layouts in a space, such as in a home music or theater setup, concert halls, and other spaces may be performed in a variety of ways. In some approaches, various devices with loudspeakers may be added to a network via Wi-Fi, Bluetooth, or some other suitable wireless network protocol.

In some approaches, there may be a central device, such as a mobile device like a cell phone or the like, that is used to manage audio from a plurality of other devices with loudspeakers. In such an approach, the central device may be used to manage a network of acoustic devices and to control audio output, channel assignments, volume, etc. for each device connected in the acoustic device network. For example, a mobile device, such as a mobile phone or some other suitable computing device, may include software that assists a user in connecting various audio devices to an acoustic device network and implements various control operations.

In some approaches, such acoustic devices may connect to each other over a wireless network protocol such as Wi-Fi or the like. As an example, a software application may be installed on a mobile device such as a phone, to which a plurality of acoustic devices is to be connected. A user may connect the mobile device to a Wi-Fi network and the software application on the mobile device may be given access to the Wi-Fi credentials, such as an SSID and password for the network. Next, each of the audio devices may be manually connected to the same Wi-Fi network using the same credentials. Once all the devices are connected, a user may proceed to configure an "Immersive Audio" group using the connected audio devices and configure the device network.

The inventors herein have recognized various issues with such approaches to setting up an acoustic device network. For example, in the approaches described above, a user may have to manually connect each device to the network, entering the network credentials for each device, which would be time-consuming and take a lot of user intervention, thereby presenting obstacles to setting up an acoustic device network. Further, in such approaches, it may be difficult and time-consuming to add or remove audio devices to the network, since each device may have to be added or removed manually by a user. Such approaches may lead to user frustration and other hurdles to setting up an acoustic device network.

### SUMMARY

In order to address the above-described issues and other issues, methods and systems for configuring an acoustic device network are provided herein. In one example approach, a method for configuring a network is provided that comprises: connecting a first device (e.g., a mobile device having audio control software installed thereon) to a second device (e.g., a primary audio device) over the network; transmitting a first audio signal via a loudspeaker associated with a third device (e.g., an audio device to be added to the network), wherein the first audio signal comprises an audio signal encoded with a network address of the third device; detecting the first audio signal via a microphone associated with the second device; decoding the network address from the first audio signal on the second device; transmitting a connection request from the second device to the first device; in response to a confirmation of connection received by the first device, transmitting a second audio signal via a loudspeaker associated with the second device, wherein the second audio signal comprises an audio signal encoded with network credentials of the network; detecting the second audio signal via a microphone associated with the third device; and decoding the network credentials from the second audio signal on the third device.

In such an approach, instead of using wireless signals, a frictionless approach to configuring device networks is provided that uses audio signals to make the connections, thereby making set-up and configuration of an acoustic device network more automatic and user-friendly. In such an approach, the audio signals may be 'watermarked' with inaudible packets of data that can be unique for each device and shared among devices during calibration steps. This can reduce some of the frustration involved with setting up device networks and further streamline the process.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIG. 1 shows an example acoustic device network configuration system.
FIGS. 2A & 2B shows example audio device network set-up processes.
FIGS. 3 & 4 illustrate an example method for setting up a primary device in an acoustic device network.
FIGS. 5 & 6 illustrate an example method for device discovery in an acoustic device point-to-point network configuration.
FIG. 7 illustrates an example method for device discovery in an acoustic broadcast network configuration.
FIG. 8 illustrates an example method for informed device deregistration in an acoustic device network.
FIG. 9 illustrates an example method for un-informed device deregistration in an acoustic device network.
FIG. 10 shows an example method for non-simultaneous device layout estimation in an acoustic device network.
FIG. 11 shows an example method for simultaneous device layout estimation in an acoustic device network.

### DETAILED DESCRIPTION

As remarked above, setting up and connecting loudspeakers and estimating their layouts in a space, such as in a home music or theater setup, concert halls, and other spaces may be performed in a variety of ways. In some approaches, various devices with loudspeakers may be added to a network via Wi-Fi, Bluetooth, or some other suitable wireless network protocol.

As described in more detail below, a network of devices can communicate with each other acoustically (i.e., "over-the-air") without any wired connection using imperceptible watermarks embedded in host audio content, i.e., various data may be encoded into audio signals that can be shared among devices in a network, for example.

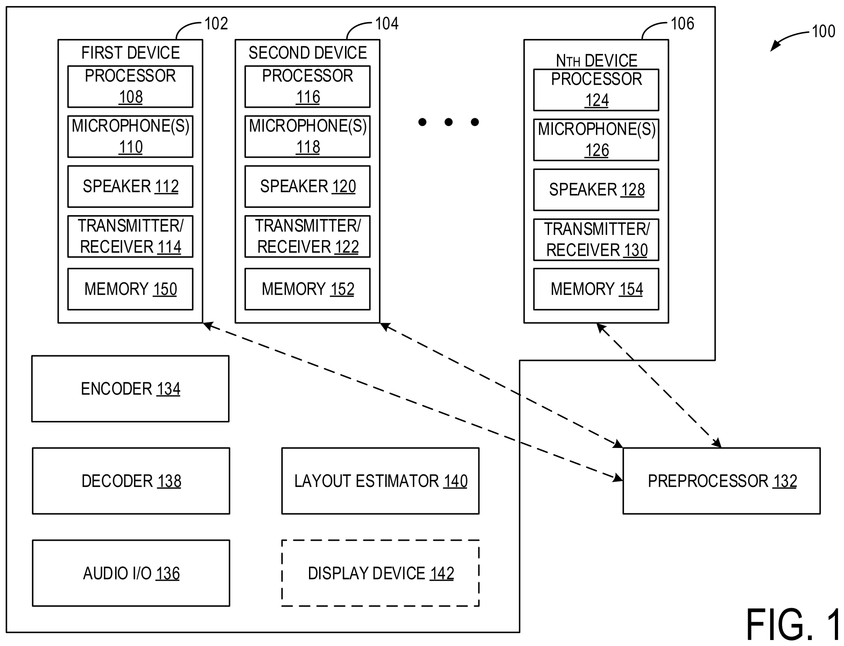

Methods and systems are described herein for creating and configuring an acoustic data network (ADN) using audio watermarking in an acoustic device network configuration system, such as shown in FIG. 1 described below. In some examples, device layout calibration using audio watermarking may also be performed. As used herein, the phrase "audio watermarking" is intended to mean data encoded into an audio signal that can be transmitted by a loudspeaker and received by a microphone. In some examples, the audio watermark may be substantially inaudible, which can be taken to mean that the modifications to the host audio signal are not perceptible to humans even though the embedded audio watermark lies in the audible frequency range of hearing for humans.

Acoustic device network configuration and layout estimation using audio watermarking, as described herein, may enable a frictionless experience of setting up multiple devices for immersive audio applications with minimal user intervention. In some examples, the approaches described herein can be extended to multiple classes of devices that have at least one microphone and at least one loudspeaker. In some examples, the approaches described herein may be backwards compatible with older devices that do not support Wi-Fi Direct.

In some approaches, an acoustic network framework may leverage a software application on a device (e.g., a mobile device such as a mobile phone) with a Wi-Fi Direct connection to create and operate a network of multiple audio devices. Wi-Fi Direct devices may connect to one another without joining a traditional home, office, or public network. With Wi-Fi direct, devices may be able to make a one-to-one connection, or a group of several devices may be able to connect simultaneously using various approaches.

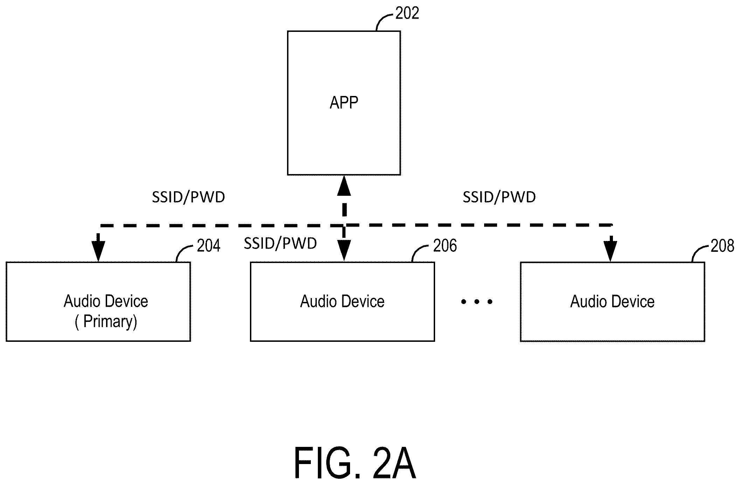

In one example approach, illustrated in FIG. 2A, an acoustic software application (APP) may be installed on a mobile device 202, to which a plurality of acoustic devices 204, 206, 208 is to be connected. A user may connect the mobile device to a Wi-Fi network and the software application on the mobile device may be given access to the Wi-Fi credentials, such as an SSID and password for the network. Next, each of the audio devices may be manually connected to the same Wi-Fi network using the same credentials. Once all the devices are connected, a user may proceed to configure an "Immersive Audio" group using the connected audio devices and configure the device network.

Once the device network has been created and configured, the data transfer between audio devices may be handled as explained next. First, a dedicated Wireless Access Message Protocol (WAMP) message may be defined. A procedure may be used to monitor and capture the messages, then broadcast the message to a peer-to-peer (P2P) network. All the audio devices in the P2P network may subscribe for their own messages. The procedure may pass-through or re-packetize messages.

For an "Immersive Audio" group feature, at least two audio devices may have to be connected to the same Wi-Fi network. Next, in the acoustic software application, the audio device names to be added to the device network may be selected. Then, on-screen instructions output by the application may guide a user through calibration steps and configuration steps. The audio devices may share data between a primary device and secondary devices over a P2P connection.

An acoustic device network (ADN) is a collection of multiple audio devices (with at least one microphone and loudspeaker) in a shared acoustic environment (such as a living room, dormitory room, etc.). In the approaches described herein, instead of using wireless signals, a frictionless approach to configuring device networks is provided that uses audio signals to make the connections, thereby making set-up and configuration of an acoustic device network more automatic and user-friendly. In such an approach, the audio signals may be 'watermarked' with inaudible packets of data that can be unique for each device and shared among devices during calibration steps. This can reduce some of the frustration involved with setting up device networks and further streamline the process.

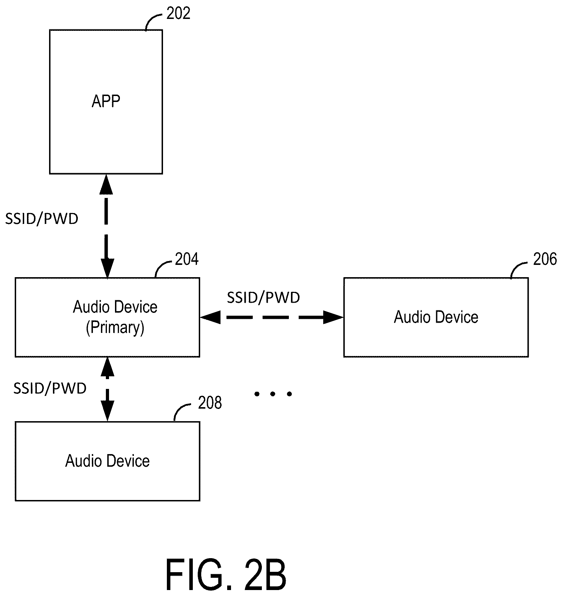

In some examples, it may be assumed that the devices are acoustically unobstructed (i.e., each device can listen to every other device) and that the devices maintain a signal to noise ratio (SNR) over environmental noise level. A high-level summary of some of the example approaches described herein is illustrated in FIG. 2B described in the following. First a primary audio device 204 may be connected to a device 202 with an acoustic software application (APP) installed thereon. For example, device 202, may be a mobile device such as a mobile phone or the like. The acoustic software application is given access to Wi-Fi credentials and may be in calibration mode. In calibration mode, the primary device loudspeaker may continuously broadcast a watermarked host signal (e.g., a music signal, a tone signal, speech signal, etc.) that may contain an encrypted message regarding a unique primary device ID and Wi-Fi information. Each time a new device wants to join the network, it 'listens' for the watermarked music, decodes the message and joins the network. The acoustic software application may register every time a new device joins the network and allow a user to confirm and then choose network configurations (e.g., stereo, 4.0, 5.0, etc.). Processing may be done locally on the device(s) without sending data to any cloud infrastructure, hence devices can be in listening mode when needed without privacy concerns.

Wi-Fi Direct devices may work just like any Wi-Fi device, with ranges up to 200 meters. They can connect from just a few feet away, but also across a home. Wi-Fi Direct may support Wi-Fi speeds up to 250 Mbps. Devices under the Wi-Fi Direct program may have protection of the security features certified under the WPA2 program, for example, but may be managed separately from the security system in an AP-based network (home, enterprise, hotspot).

Devices in an ADN may form both P2P and/or broadcast networks. Devices enrolled in the ADN may be designed to form a multi-channel listening experience within the same room. As such, their range may be limited by the signal-to-noise ratios (SNR) at microphones to less than 6 meters in some examples. Devices enrolled in ADN may support up to a few hundred bps for data transfer, for example. Due to lower transfer speeds, channel routing/streaming may be done directly through the acoustic software application in some examples. Network security in ADN may be managed by a user on the acoustic software application, in some examples.

FIG. 1 shows an example acoustic device network configuration system 100. In some examples, the acoustic device network configuration system 100 as herein described may be distributed amongst multiple devices, such as a first device 102, a second device, 104, an N-th device 106, and the like. Each of these devices may be acoustic devices that comprise a processor, at least one microphones, at least one loudspeaker, a wired or wireless transmitter/receiver, and memory. For example, the first device 102 may comprise a processor 108, a microphone 110, a loudspeaker 112, a transmitter/receiver 114, and memory 150, the second device 104 may comprise a processor 116, one or more microphones 118, a loudspeaker 120, a transmitter/receiver, and memory 152, and the N-th device 106 may comprise a processor 124, one or more microphones 126, a loudspeaker 128, a transmitter/receiver 130, and memory 154.

Each of the processors of the plurality of devices, such as processors 108, 116, and 124, may be single core or multi-core, and the programs executed thereon may be configured for parallel or distributed processing. In some embodiments, the processors may optionally include components that are distributed throughout two or more devices, which may be remotely located and/or configured for coordinated processing. In some embodiments, one or more aspects of the processors may be virtualized and executed by remotely accessible networked computing devices in a cloud computing configuration.

The memories, such as memory 150, 152, and 154 may include instructions that are executable by the respective processors. For example, the memories may be non-transitory memory storage mediums configured with instructions of algorithms, methods, processes, or the like, as will be herein described. For example, each of the memories herein described may include one or more modules or systems that store instructions. In some examples, portions of instructions may be stored in memory of one device but not another and in other examples, all instructions may be stored in all devices.

The memories of the acoustic layout estimation system 100 may store an encoder 134, an audio input/output (I/O) 136, a decoder 138, and a layout estimator 140, and may include various other subsystems. The encoder 134 may store instructions for obtaining desired host audio signals, e.g., either a predefined single or multi-channel tone or audio content selected by the user, of the plurality of devices in the system and embedding watermarks in the audio signals in some examples. The audio I/O 136 may simultaneously play and record watermarked signals of the plurality of devices. In some examples, the watermarking performed via the encoder 134 may be performed in real-time in a frame-wise manner; however, in other examples, the encoder may perform watermarking and store the watermarking for later use. Thus, the methods executed via the encoder 134 may also be performed in real-time.

In some examples, the decoder 138 may store instructions for estimating time-of-arrivals (TOAs) between every device based on the recorded watermarked audio signals. The estimated TOAs may also comprise TOA confidence levels. The layout estimator 140 may store instructions for determining device locations based on estimated TOAs. In particular, layout estimation may be robust to outlier TOAs, whereby outlier TOAs are detected and filtered out, thereby increasing the accuracy of layout determination.

As noted, the instructions of the encoder 134, the audio I/O 136, the decoder 138, and the layout estimator 140 may be stored in multiple of the plurality of devices, and in some instances in all of the devices. In this way, the methods, as herein disclosed, may be executed by the plurality of devices without use of external processing devices or equipment. In some examples, the processing of the instructions stored in memory may be distributed amongst the different devices, for example, each device may independently encode its own loudspeaker input, e.g., watermark the host audio prior playback, and independently decode its own microphone output, e.g., estimate the TOA and corresponding confidence levels between its one or more microphones and the acoustic signals simultaneously originating from every loudspeaker in the system. TOAs and confidence levels, estimated independently at each device, may then be transmitted, via the wired or wireless communication module of each device, to a select primary device, which may execute the instructions of the layout estimator, for example.

Each of the devices (e.g., the first device 102, the second device 104, and the N-th device 106) may be communicatively coupled to a preprocessor 132. The preprocessor 132 may include instructions for generating watermarks (e.g., PN sequences or other suitable approaches for generating watermarks). The preprocessor 132 may be a single processing unit and may store the generated watermarks for each device within the network of devices. In some examples, generation of the watermarks may occur offline (e.g., separate from some routines herein described). Each device may thus obtain a designated watermark from the preprocessor 132 (e.g., from memory of the preprocessor 132) in order to perform layout estimation and/or perform other operations described herein.

In some examples, the acoustic device network configuration system 100 may include or otherwise be coupled to a display device 142 configured to output a graphical user interface (GUI). For example, one of the plurality of devices may include the display device. In other examples, the acoustic layout estimation system 100 may be coupled to an external display device, such as a TV, laptop, tablet, or smartphone, for example via a wired or wireless connection.

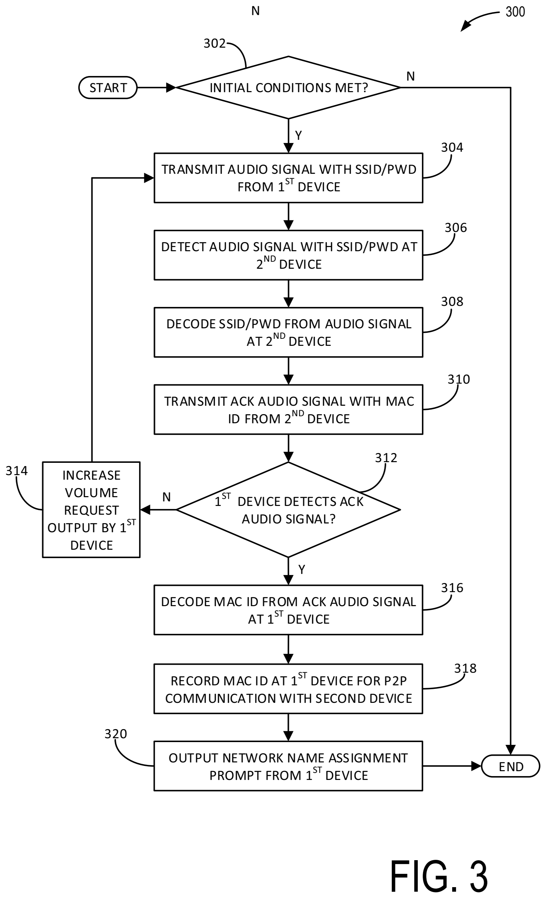

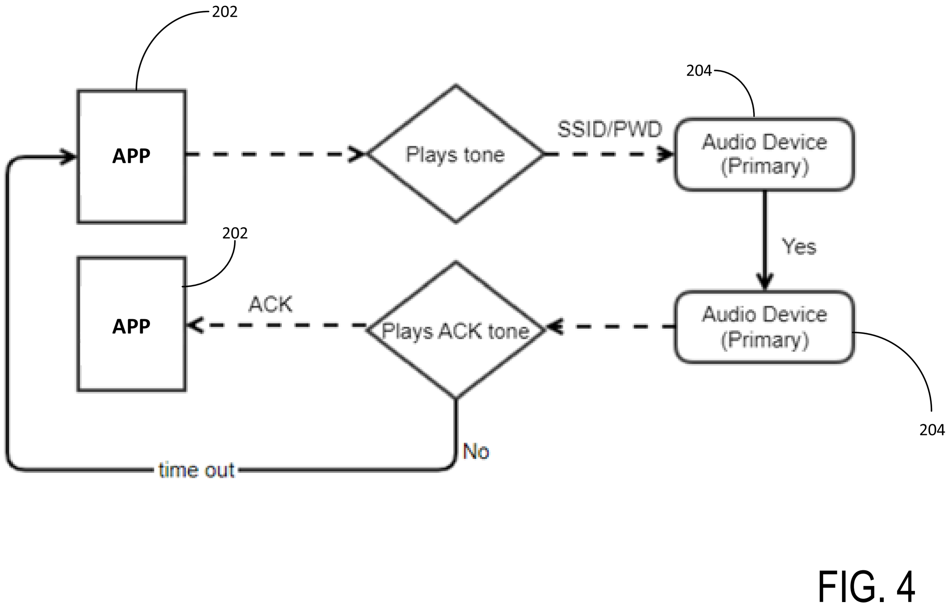

FIGS. 3 & 4 illustrate an example method 300 for setting up a primary device 204 in an acoustic device network. In particular, FIG. 3 shows example steps of method 300 and FIG. 4 illustrates method 300 from a device perspective, where an initial set up process may be performed connecting a primary audio device (referred to below as a second device) to a first device 202 that has an acoustic software application (APP) installed thereon. For example, first device 202 may comprise a mobile device with an acoustic software application that is used to configure and manage an acoustic device network.

At 302, method 300 includes determining if initial conditions are met. In this example method, the acoustic software application on the first device 202 may interface directly with the primary audio device 204 (the second device). The application can transmit watermarked data through the loudspeaker associated with the first device 202 and receive and decode watermarked microphone data from the primary device (the second device). The process may be triggered by a user input received through the acoustic software application on the first device 202 which may enable listening mode on the devices. Thus, initial conditions may include a user input on the acoustic software application on the first device 202 to initiate the initial set up routine and enable listening mode on the devices. Additionally, in some examples, initial conditions may include having a sufficiently quiet environment, for example a volume of any ambient noise in the environment may be below a predetermined threshold. Additionally, initial conditions may include connection of the first device 202 to a network (e.g., a Wi-Fi network or via Bluetooth) and access to network credentials (e.g., SSID and password for the network) provided to the acoustic software application on the first device 202.

If initial conditions are met at 302, method 300 proceeds to 304 to transmit an audio signal with SSID and password (SSID/PWD) of the network from the first device 202. In particular, at 302, method 300 may include transmitting an audio signal via a loudspeaker associated with the first device 202, wherein the audio signal comprises an audio signal encoded with the network credentials of the network. For example, the acoustic software application on first device 202 may play a tone which contains encrypted SSID/PWD through the first device's loudspeaker. The primary device 204 (the second device) may be in listening mode near the first device, which may be a mobile phone or other mobile device for example.

At 306, method 300 includes detecting the audio signal with the SSID/PWD at a second device 204 (a primary audio device). In particular, the audio signal from the first device 202 that is encoded with the network credentials may be detected by a microphone associated with the second device 204.

At 308, method 300 includes decoding the SSID/PWD from audio signal at the second device 204. In particular, the second device may decode the network credentials from the audio signal from the first device 202 that is encoded with the network credentials. The second device 204 may use a predetermined key to decode the network credentials from the audio signal, for example.

At 310, method 300 includes transmitting an acknowledgement (ACK) audio signal encoded with a MAC ID from the second device 204. In particular, an ACK audio signal may be transmitted via a loudspeaker associated with the second device 204 if the second device successfully decodes the network credentials from the audio signal detected at step 306. The ACK message audio signal may be watermarked with (i.e. encoded with) a network address, e.g., a media access control (MAC) ID, of the second device 204 (the primary device).

At 312, method 300 includes determining if the first device 202 detects the ACK audio signal transmitted from the second device 204. If at 312, the first device 202 does not detect the ACK audio signal, then method 300 proceeds to 314 to output an increase volume request by the first device and then return to 304 to again transmit the audio signal with SSID/PWD from the first device. In particular, if an acknowledgement audio signal from the second device 204 is not detected via a microphone associated with the first device 202 after a predetermined period of time, then a volume increase prompt may be output from the first device 202. In some examples, the volume increase prompt may be output to a display device associated with the first device. For example, if the ACK message is not received by the acoustic software application on first device 202 after predetermined time out period, then the acoustic software application on first device 202 may retransmit the audio signal from step 304 and request a user to increase the loudspeaker volume on the second device 204 to re-try a connection.

However, if at 312 the first device 202 detects the ACK audio signal, then method 300 proceeds to 316 to decode the MAC ID from the ACK audio signal at the first device 202. In particular, a microphone associated with first device 202 may detect the ACK audio signal and then the acoustic software application on first device 202 may decode the network address from the ACK audio signal. At 318, method 300 includes recording the network address (MAC ID) at the first device 202 for P2P communication with the second device 204.

At 320, method 300 includes outputting a network name assignment prompt from the first device 202. For example, the acoustic software application on first device 202 may prompt a user to assign a name to the network (e.g., "Living Room") after both devices are successfully connected.

The methods described herein, e.g., method 300 described above and illustrated in FIGS. 3 & 4 may be used to additional devices to the acoustic device network. For example, the method described herein can be used to add a third, fourth or N-th device to the acoustic device network.

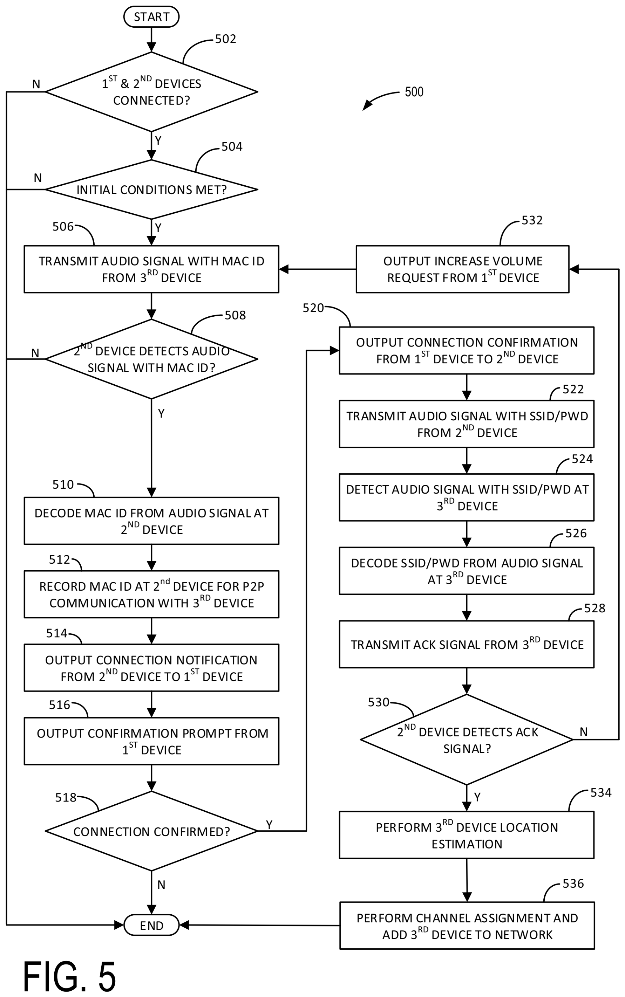

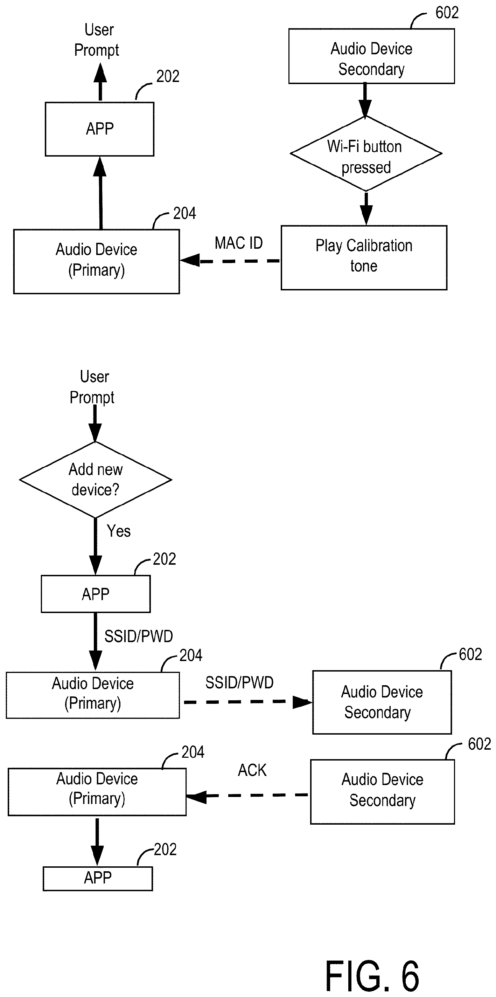

FIGS. 5 & 6 illustrate an example method 500 for device discovery in an acoustic device point-to-point network configuration. In particular, FIG. 5 shows example steps of method 500 and FIG. 6 illustrates method 500 from a device perspective, where a secondary audio device 602 (referred to below as a third device) is added to an acoustic device network where a first device 202 and second device 204 (primary audio device) are already connected to the network. As above, first device 202 may comprise a mobile device or the like with an acoustic software application (APP) that is used to configure and manage an acoustic device network.

At 502, method 500 includes determining if the first and second devices are connected to the network. In particular, method 500 may be implemented after a successful initial setup as described above with reference to FIGS. 3 & 4, where both first device 202 and second device 204 are connected to an acoustic device network. If first and second devices are connected at 502, method 500 proceeds to 504 to determine if initial conditions are met.

Additional devices may be added to the network after at least one device (the primary device also referred to herein as the second device 204) is connected an acoustic software application on the first device 202 over Wi-Fi, Bluetooth, or some other suitable wireless network protocol. Examples of initial conditions include having the new device to be added to the network (the third device 602) in an acoustically close range (unobstructed) to the primary device (second device 204) during enrollment. The process may be triggered by a user input to the acoustic software application on the first device 202 to initiate the process and enable listening mode on the devices.

If initial conditions are met at 504, method 500 proceeds to 506 to transmit an audio signal with a MAC ID from the third device 602. In particular, method 500 may include transmitting a first audio signal via a loudspeaker associated with the third device 602 (secondary audio device), wherein the first audio signal comprises an audio signal encoded with a network address (e.g., MAC ID) of the third device. For example, once a Wi-Fi button is pressed on the new device (third device 602), the device may play watermarked calibration music which includes the MAC ID of the device. In some examples, the volume level of the new device may have to be louder than the background noise level at the location of the second device 204 (the primary device).

Method 500 then proceeds to 508 to determine if the second device 204 detects the first audio signal encoded with the network address (e.g., MAC ID). In particular, method 500 may include detecting (or attempting to detect) the first audio signal via a microphone associated with the second device 204. If the second device 204 detects the first audio signal with the MAC ID at 508, then method 500 proceeds to 510 to decode the network address (e.g., MAC ID) from the first audio signal at the second device 204. At 512, method 500 includes recording the network address (e.g., MAC ID) at the second device 204 for P2P communication with the third device 602.

At 514, method 500 includes outputting a connection notification from the second device 204 to the first device 202. In particular, a connection request may be transmitted from the second device 204 to the first device 202 with the acoustic software application installed thereon to provide a notification of a new device connection request. At 516, method 500 includes outputting a confirmation prompt from the first device 202. For example, the acoustic software application on first device 202 may prompt a user to confirm that the third device 602 is to be added to the network. At 518, method 500 includes determining if the connection is confirmed. If the connection is not confirmed at 518, method 500 ends. However, if the connection is confirmed at 518, method 500 proceeds to 520 to output a connection confirmation from the first device 202 to the second device 204. Then, at 522, method 500 includes transmitting an audio signal with the SSID/PWD of the network from second device 204. In particular, in response to a confirmation of connection received by the first device 202, a second audio signal may be transmitted via a loudspeaker associated with the second device 204, wherein the second audio signal comprises an audio signal encoded with network credentials of the network. For example, the acoustic software application on first device 202 may output a prompt to a display device associated with the first device asking a user: "Do you want to add a new device(s)?". If the user selects "Yes" or otherwise provides a suitable confirmation input at the first device 202, then the first device may send a Bluetooth/Wi-Fi message to second device 204 (the primary device) for password/SSID sharing. However, if the user selects "No", the acoustic software application on first device 202 may ignore the connection request.

At 524, method 500 includes detecting the audio signal with the SSID/PWD at the third device 602. In particular, the second audio signal may be detected via a microphone associated with the third device 602. At 526, method 500 includes decoding the SSID/PWD from second audio signal at the third device 602. At 528, method 500 includes transmitting an acknowledgement (ACK) signal from the third device 602. For example, if third device 602 successfully connects to the network using the decoded network credentials, then the third device may play an acknowledgement tone via a loudspeaker associated with the third device, where the acknowledgement tone contains an acknowledgement (ACK) message.

At 530, method 500 includes determining if the second device 204 detects the ACK signal from the third device 602. If the second device 204 does not detect the ACK signal at 530, method 500 proceeds to 532 to output an increase volume request from the first device 202 and then to proceed back to 506 to transmit an audio signal with MAC ID from the third device 602. In particular, if an acknowledgement audio signal from the third device 602 is not detected via a microphone associated with the first device 202 after a predetermined period of time, then a volume increase prompt may be output from the first device 202. In some examples, the volume increase prompt may be output to a display device associated with the first device 202. For example, if the ACK message is not received by the acoustic software application on first device 202 after predetermined time out period, then the acoustic software application on first device 202 may request a user to increase the loudspeaker volume on the third device 602 and method 500 may return to step 506.

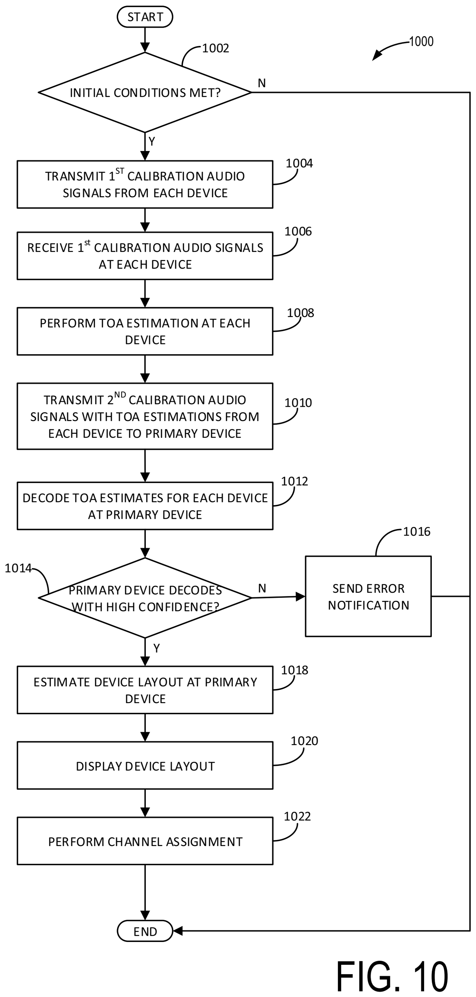

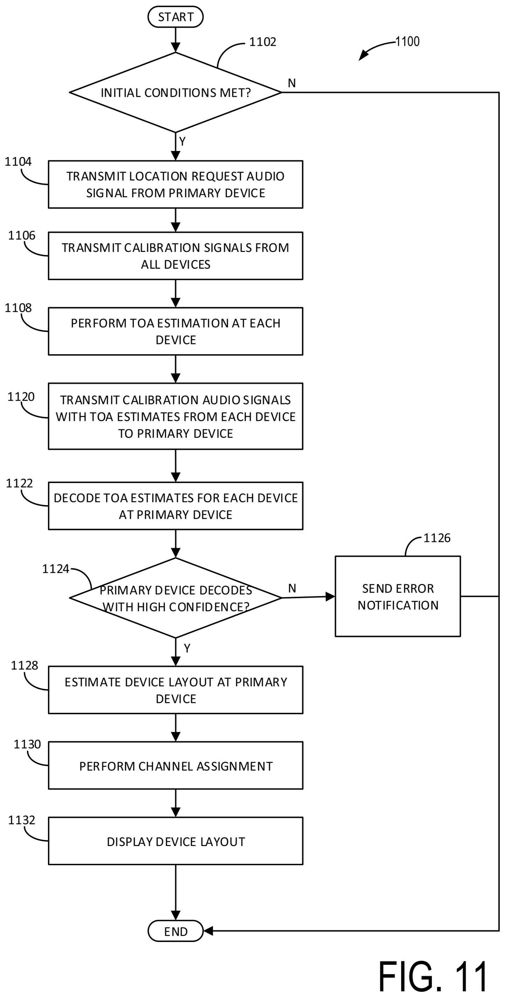

However, if second device 204 detects the ACK signal at 530, then method 500 may optionally proceed to 534 to perform a location estimation routine to estimate a location of the third device 602 and/or a layout estimation of all the devices connected to the acoustic device network. Example location estimate routines are described in more detail below with reference to FIGS. 10 & 11.

At 536, method 500 includes performing channel assignment and adding the third device 206 to the network. For example, a channel assignment may be performed by a user on the acoustic software application on first device 202 and a user may play music that is output to third device 602 as well as second device 204. After each device is successfully connected to the network, the device ID and device name may be added to the acoustic device network.

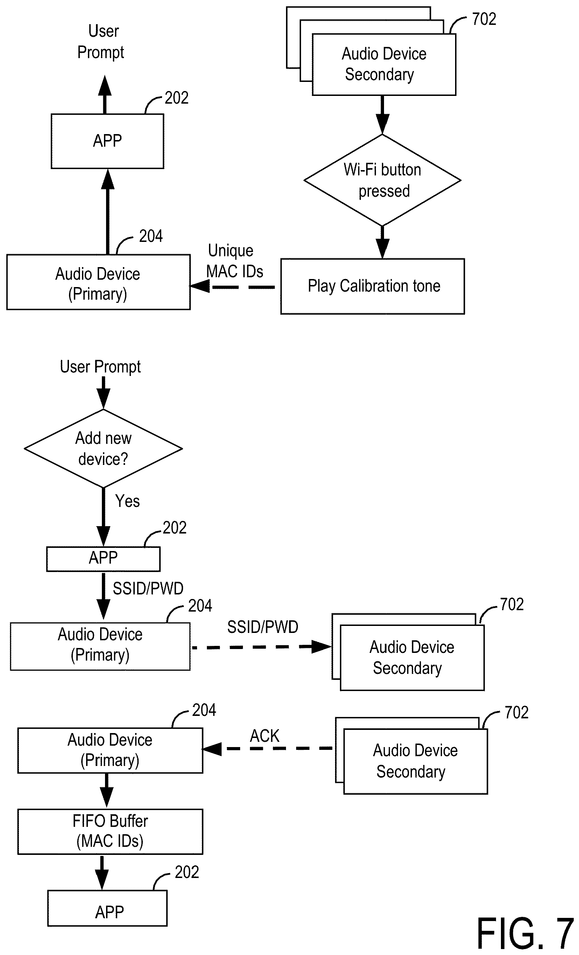

FIG. 7 illustrates an example method from a device perspective for device discovery in an acoustic broadcast network configuration. The method illustrated in FIG. 7 is similar to method 500 described above and may be used when multiple secondary audio devices 702 are to be added to an acoustic device network. In the method illustrated in FIG. 7, a first device 202 and second device 204 (primary audio device) are already connected to the network. As above, first device 202 may comprise a mobile device or the like with an acoustic software application (APP) that is used to configure and manage an acoustic device network.

With reference to FIG. 7, once a Wi-Fi button is pressed on each new device in a plurality of secondary audio devices 702, each new device plays calibration music which may include unique MAC IDs for each new device. The primary device 204 may decode and save multiple MAC IDs in a first-in first-out (FIFO) buffer and notifies the acoustic software application on the first device 202. The acoustic software application on the first device 202 may prompt a user on whether or not to add the new device(s) to the network. If the user inputs a confirmation to the acoustic software application on the first device 202, then first device 202 may send a Bluetooth/Wi-Fi message to the primary device 204 for password/SSID sharing. If the user does not confirm the connections, then the acoustic software application on the first device 202 may ignore the connection request.

Once the connection requests are confirmed, then the primary device 204 may embed the SSID/PWD to ongoing calibration music and broadcast it. Each new device in the plurality of secondary audio devices 702 may detect the watermark and decode the password and SSID. If successful, each new device plays an acknowledgement tone containing a unique acknowledgement (ACK) message. If the same number of ACK messages is not received by the acoustic software application on the first device 202 as the number of MAC IDs in the buffer, after a time out period, the acoustic software application on the first device 202 may request a user to increase the speaker volume on the devices and retry connection. For example, the user may provide input to verify the correct number of devices connected to the acoustic software application on the first device 202. After the devices are successfully connected, device IDs and device names may be added to the acoustic device network. After successful acoustic device network configuration, the acoustic software application on the first device 202 and the primary device 204 may assign, maintain and share a dictionary of device IDs, device priorities and unique watermarks for each device over Bluetooth or Wi-Fi with each device.

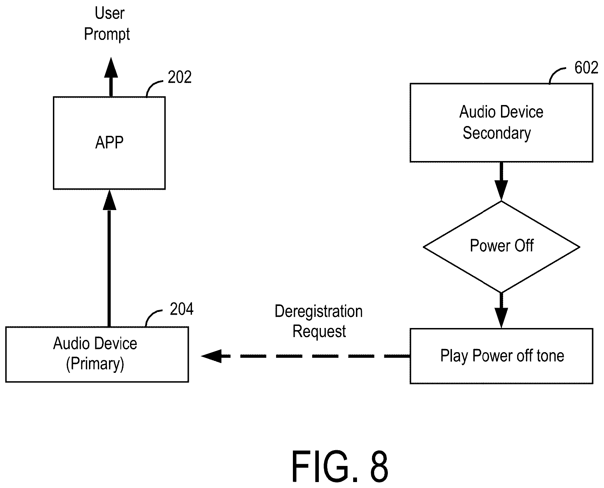

FIG. 8 illustrates an example method for informed device deregistration in an acoustic device network. In this method, at least one device (e.g., primary device 204) may be connected to the acoustic software application (APP) on the first device 202 over Wi-Fi (or Bluetooth). Informed deregistration covers scenarios of powering off a device (e.g., device 602 shown in FIG. 8) or a device running out of charge. A specific command ID may be defined and embedded to the power-off tone. The device 602 may play a power-off tone to inform the primary device 204 about de-registration. The primary device 204 may receive the deregistration request and remove the device 204 from the acoustic device network. If the primary device 204 decodes the de-registration request with low confidence, it notifies the acoustic software application on the first device 202, which in turn prompts the user to select the device and confirm de-registration. After successful de-registration, the primary device 204 may also send a request to the acoustic software application on the first device 202 to prompt the user for channel re-assignment.

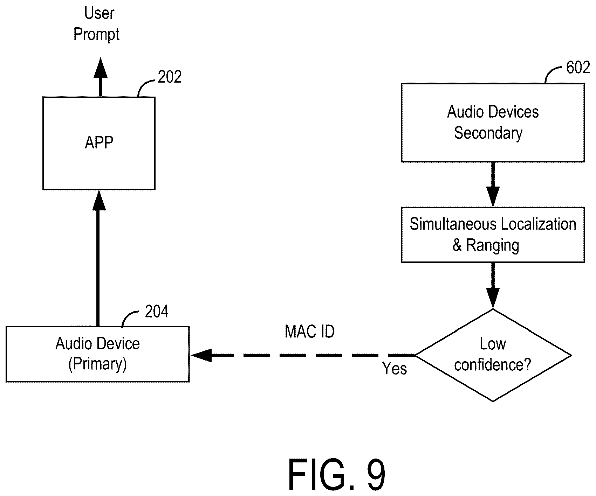

FIG. 9 illustrates an example method for un-informed device deregistration in an acoustic device network. Un-informed deregistration covers scenarios where a device (e.g., device 602 shown in FIG. 9) is moved out of acoustic range of primary device 204 or obstructed for any reason. This scenario is detected using confidence scores calculated during a background range estimation at the primary device 204. All the devices in the acoustic device network may perform simultaneous and asynchronous ranging using imperceptible watermarks in the background periodically. If the confidence in the ranging estimates drops below a pre-defined threshold, the primary device 204 may notify the acoustic software application on the first device 202. The acoustic software application on the first device 202 may prompt a user to check the status of the device with low confidence or choose to de-register the device. The primary device 204 may also notify the acoustic software application on the first device 202 periodically about device layout etc. If the primary device 204 loses its Wi-Fi connection for any reason, the acoustic software application on the first device 202 may prompt the user to choose another device as a primary device. In some examples, the primary device may be assigned automatically by the first device 202.

FIG. 10 shows an example method 1000 for non-simultaneous device layout estimation in an acoustic device network. At 1002, method 1000 includes determining if initial conditions are met. For example, at least one device (primary device) may have to be connected to the acoustic software application on the first device 202 over Wi-Fi (or Bluetooth). This method may be used for estimating the device layout before devices are playing any audio content, such as in a quiet living room or home theatre. The process may be triggered by a user through the acoustic software application on the first device 202 which enables listening mode on the devices.

If initial conditions are met at 1002, method 1000 proceeds to 1004 to transmit first calibration audio signals from each device. For example, each device may play a calibration tone at a time in order of device ID or device priority. At 1006, method 1000 includes receiving first calibration audio signals at each device. For example, microphones associated with each device in the network may detect the calibration audio signals. At 1008, method 1000 includes performing Time-of-Arrival (TOA) estimation at each device. For example, each device may listen for the calibration tone and performs its own TOA estimation using any suitable method. At 1010, method 1000 includes transmitting second calibration audio signals with TOA estimations from each device to the primary device (e.g., primary audio device 204). For example, all devices except the primary device may begin to play a second tone (which is watermarked for data transfer) to transfer the individual TOA estimates to the primary device, one at a time in order of device ID or device priority. At 1012, method 1000 includes decoding TOA estimates for each device at the primary device. For example, the primary device 204 may decode all messages and estimate the initial device layout. At 1014, method 1000 includes determining if the primary device decodes with high confidence. If primary device does not decode with high confidence at 1014, method 1000 proceeds to 1016 to send an error notification and then ends. For example, if the primary device 204 cannot decode messages successfully with high confidence (set by a pre-defined threshold), it may notify the acoustic software application on the first device 202. The acoustic software application on the first device 202 may then raise an error and prompt a user to repeat the calibration process with a different layout. However, if primary device decodes with high confidence at 1014, method 1000 proceeds to 1018 to estimate device layout at the primary device. At 1020, method 1000 includes displaying device layout. At 1022, method 1000 includes performing channel assignment. For example, the primary device 204 may share the estimated coordinates with the acoustic software application on the first device 202 through Wi-Fi or Bluetooth for user display and for channel assignment, for example. Once successful, the acoustic software application on the first device 202 may display the device layout and performs channel assignment, channel routing and other playback channel controls.

FIG. 11 shows an example method 1100 for simultaneous device layout estimation in an acoustic device network. At 1102, method 1100 includes determining if initial conditions are met. For example, method 1100 may be used for estimating the device layout dynamically while devices are simultaneously playing host audio content, where interruptions are not desirable. This can also be performed after the initial layout has been estimated as described above. The process may be triggered by a user through the acoustic software application on the first device 202 which enables listening mode on the devices.

If initial conditions are met at 1102, method 1100 proceeds to 1104 to transmit a location request audio signal from the primary device, e.g., primary device 204. For example, once the process is initiated, the primary device may transmit a watermarked signal (with request for device location update) to all secondary devices to trigger the layout estimation process. At 1106, method 1100 includes transmitting calibration signals from all devices. For example, all the audio devices in the acoustic device network may start embedding their watermarked signal in the host audio channel content which is being played over the acoustic device network. At 1108, method 1100 includes performing TOA estimation at each device. For example, each device may listen for the watermarked signal and performs its own TOA estimation, using any suitable method, for every other device using the watermark dictionary which was shared after successful configuration. At 1120, method 1100 includes transmitting calibration audio signals with TOA estimates from each device to the primary device. For example, once each device computes its individual TOA in a prescribed time duration, each device (except the primary device) may transfer the individual TOA estimates to the primary device by embedding a second set of watermark signals. At 1122, method 1100 includes decoding TOA estimates for each device at the primary device. For example, primary device 204 may decode all messages and update the initial device layout. At 1124, method 1100 includes determining if the primary device decodes with high confidence. If the primary device does not decode with high confidence at 1124, method 1100 proceeds to 1126 to send an error notification and then ends. For example, if the primary device 204 cannot decode messages successfully with high confidence, it may notify the acoustic software application on the first device 202. The acoustic software application on the first device 202 may then raise an error and prompt the user to repeat the calibration process with a different layout. However, if the primary device decodes with high confidence (set by a pre-defined threshold) at 1124, method 1100 proceeds to 1128 to estimate device layout at the primary device. For example, the primary device may share the estimated coordinates with the acoustic software application on the first device 202 through Wi-Fi or Bluetooth for user display and for channel assignment. At 1130, method 1100 includes performing channel assignment. At 1132, method 1100 includes displaying device layout. For example, once successful, the acoustic software application on the first device 202 may display the device layout and perform channel assignment, channel routing and other playback channel controls, for example.

The invention will be further described in the following paragraphs. In one aspect, a method for configuring a network is provided that comprises: connecting a first device to a second device over the network; transmitting a first audio signal via a loudspeaker associated with a third device, wherein the first audio signal comprises an audio signal encoded with a network address of the third device; detecting the first audio signal via a microphone associated with the second device; decoding the network address from the first audio signal on the second device; transmitting a connection request from the second device to the first device; in response to a confirmation of connection received by the first device, transmitting a second audio signal via a loudspeaker associated with the second device, wherein the second audio signal comprises an audio signal encoded with network credentials of the network; detecting the second audio signal via a microphone associated with the third device; and decoding the network credentials from the second audio signal on the third device. In some examples, the network address of the third device may comprise a MAC ID of the third device. In some examples, the network credentials may comprise an SSID and password of the network. Further in some examples, the first and second audio signals may be inaudible. In some aspects, the method may further comprise: if an acknowledgement audio signal from the third device is not detected via a microphone associated with the first device after a predetermined period of time, outputting a volume increase prompt from the first device. In some examples, the volume increase prompt may be output to a display device associated with the first device. In some aspects, the method may further comprise: connecting the first device to the second device over the network comprises: connecting the first device to the network; transmitting a third audio signal via a loudspeaker associated with the first device, wherein the third audio signal comprises an audio signal encoded with the network credentials of the network; detecting the third audio signal via a microphone associated with the second device; and decoding the network credentials from the third audio signal on the second device. In some examples, the third audio signal may be inaudible. In some aspects, the method may further comprise: if an acknowledgement audio signal from the second device is not detected via a microphone associated with the first device after a predetermined period of time, outputting a volume increase prompt from the first device. In some examples, the volume increase prompt may be output to a display device associated with the first device. In some examples, the first device may comprise a mobile phone. In some examples, the method may further comprise estimating a location of the third device.

In additional aspects, a method for configuring an acoustic device network is provided that comprises: connecting a first device to the acoustic device network; transmitting a first audio signal via a loudspeaker associated with the first device, wherein the first audio signal comprises an audio signal encoded with the network credentials of the acoustic device network; detecting the first audio signal via a microphone associated with a second device; decoding the network credentials from the first audio signal on the second device; connecting the second device to the acoustic device network using the network credentials; transmitting a second audio signal via a loudspeaker associated with a third device, wherein the second audio signal comprises an audio signal encoded with a network address of the third device; detecting the second audio signal via the microphone associated with the second device; decoding the network address from the second audio signal on the second device; transmitting a connection request from the second device to the first device; in response to a confirmation of connection received by the first device, transmitting a third audio signal via the loudspeaker associated with the second device, wherein the third audio signal comprises an audio signal encoded with network credentials of the acoustic device network; detecting the third audio signal via a microphone associated with the third device; and decoding the network credentials from the third audio signal on the third device. In some examples, the network address of the third device comprises a MAC ID of the third device and wherein the network credentials comprise an SSID and password of the acoustic device network. In some examples, the first, second, and third audio signals may be audible signals with inaudible watermarks.

In additional aspects a system is provided comprising: a first device comprising a first loudspeaker, a first microphone, and a first processor; a second device comprising a second loudspeaker, a second microphone, and a second processor; a third device comprising a third loudspeaker, a third microphone, and a third processor; wherein the first device and the second device are connected to a network; wherein the third processor is configured to transmit a first audio signal via the third loudspeaker, wherein the first audio signal comprises an audio signal encoded with a network address of the third device; wherein the second processor is configured to: detect the first audio signal via the second microphone; decode the network address from the first audio signal; transmit a connection request to the first device; in response to a confirmation of connection received by the first device, transmit a second audio signal via the second loudspeaker, wherein the second audio signal comprises an audio signal encoded with network credentials of the network; wherein the third processor is further configured to: detect the second audio signal via the third microphone; and decode the network credentials from the second audio signal. In some examples, the second processor may be further configured to estimate a location of the third device. In some examples, the first and second audio signals may be audible signals having inaudible watermarks. In some examples, the network address of the third device comprises a MAC ID of the third device and wherein the network credentials comprise an SSID and password of the network.

When introducing elements of various embodiments of the present disclosure, the articles "a," "an," and "the" are intended to mean that there are one or more of the elements. The terms "first," "second," and the like, do not denote any order, quantity, or importance, but rather are used to distinguish one element from another. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object. In addition, it should be understood that references to "one embodiment" or "an embodiment" of the present disclosure are not intended to be interpreted as excluding the existence of additional embodiments that also incorporate the recited features.

In addition to any previously indicated modification, numerous other variations and alternative arrangements may be devised by those skilled in the art without departing from the spirit and scope of this description, and appended claims are intended to cover such modifications and arrangements. Thus, while the information has been described above with particularity and detail in connection with what is presently deemed to be the most practical and preferred aspects, it will be apparent to those of ordinary skill in the art that numerous modifications, including, but not limited to, form, function, manner of operation and use may be made without departing from the principles and concepts set forth herein. Also, as used herein, the examples and embodiments, in all respects, are meant to be illustrative and should not be construed to be limiting in any manner.

### ADDITIONAL EXAMPLES

Example 1. A method for configuring a network, comprising: connecting a first device to a second device over the network; transmitting a first audio signal via a loudspeaker associated with a third device, wherein the first audio signal comprises an audio signal encoded with a network address of the third device; detecting the first audio signal via a microphone associated with the second device; decoding the network address from the first audio signal on the second device; transmitting a connection request from the second device to the first device; in response to a confirmation of connection received by the first device, transmitting a second audio signal via a loudspeaker associated with the second device, wherein the second audio signal comprises an audio signal encoded with network credentials of the network; detecting the second audio signal via a microphone associated with the third device; and decoding the network credentials from the second audio signal on the third device.

Example 2. The method of example 1, wherein the network address of the third device comprises a MAC ID of the third device.

Example 3. The method of example 1 or 2, wherein the network credentials comprise an SSID and password of the network.

Example 4. The method of any of examples 1 to 3, wherein the first and second audio signals are audible signals that contain inaudible watermarks.

Example 5. The method of any of examples 1 to 4, wherein the first and second audio signals are audible signals that contain inaudible watermarks, and wherein the network address of the third device comprises a MAC ID of the third device.

Example 6. The method of any of examples 1 to 5, further comprising: if an acknowledgement audio signal from the third device is not detected via a microphone associated with the first device after a predetermined period of time, outputting a volume increase prompt from the first device.

Example 7. The method of any of examples 1 to 6, wherein the volume increase prompt is output to a display device associated with the first device.

Example 8. The method of any of examples 1 to 7, wherein connecting the first device to the second device over the network comprises: connecting the first device to the network; transmitting a third audio signal via a loudspeaker associated with the first device, wherein the third audio signal comprises an audio signal encoded with the network credentials; detecting the third audio signal via a microphone associated with the second device; and decoding the network credentials from the third audio signal on the second device.

Example 9. The method of any of examples 1 to 8, where the third audio signal is an audible signal with inaudible watermarks.

Example 10. The method of any of examples 1 to 9, further comprising: if an acknowledgement audio signal from the second device is not detected via a microphone associated with the first device after a predetermined period of time, outputting a volume increase prompt from the first device.

Example 11. The method of any of examples 1 to 10, wherein the volume increase prompt is output to a display device associated with the first device.

Example 12. The method of any of examples 1 to 11, wherein the first device comprises a mobile device.

Example 13. The method of any of examples 1 to 12, further comprising estimating a location of the third device.

Example 14. A method for configuring an acoustic device network, comprising: connecting a first device to the acoustic device network; transmitting a first audio signal via a loudspeaker associated with the first device, wherein the first audio signal comprises an audio signal encoded with the network credentials of the acoustic device network; detecting the first audio signal via a microphone associated with a second device; decoding the network credentials from the first audio signal on the second device; connecting the second device to the acoustic device network using the network credentials; transmitting a second audio signal via a loudspeaker associated with a third device, wherein the second audio signal comprises an audio signal encoded with a network address of the third device; detecting the second audio signal via the microphone associated with the second device; decoding the network address from the second audio signal on the second device; transmitting a connection request from the second device to the first device; in response to a confirmation of connection received by the first device, transmitting a third audio signal via the loudspeaker associated with the second device, wherein the third audio signal comprises an audio signal encoded with network credentials of the acoustic device network; detecting the third audio signal via a microphone associated with the third device; and decoding the network credentials from the third audio signal on the third device.

Example 15. The method of example 14, wherein the network address of the third device comprises a MAC ID of the third device and wherein the network credentials comprise an SSID and password of the acoustic device network.

Example 16. The method of example 14 or 15, wherein the first, second, and third audio signals are audible signals that contain inaudible watermarks.

Example 17. A system, comprising: a first device comprising a first loudspeaker, a first microphone, and a first processor; a second device comprising a second loudspeaker, a second microphone, and a second processor; a third device comprising a third loudspeaker, a third microphone, and a third processor; wherein the first device and the second device are connected to a network; wherein the third processor is configured to transmit a first audio signal via the third loudspeaker, wherein the first audio signal comprises an audio signal encoded with a network address of the third device; wherein the second processor is configured to: detect the first audio signal via the second microphone; decode the network address from the first audio signal; transmit a connection request to the first device; in response to a confirmation of connection received by the first device, transmit a second audio signal via the second loudspeaker, wherein the second audio signal comprises an audio signal encoded with network credentials of the network; wherein the third processor is further configured to: detect the second audio signal via the third microphone; and decode the network credentials from the second audio signal.

Example 18. The system of example 17, wherein the second processor is further configured to estimate a location of the third device.

Example 19. The system of example 17 or 18, wherein the first and second audio signals are audible signals with inaudible watermarks.

Example 20. The system of example 17, 18 or 19, wherein the network address of the third device comprises a MAC ID of the third device and wherein the network credentials comprise an SSID and password of the network.

## Claims

1. A method for configuring a network, comprising:
connecting a first device to a second device over the network;
transmitting a first audio signal via a loudspeaker associated with a third device, wherein the first audio signal comprises an audio signal encoded with a network address of the third device;
detecting the first audio signal via a microphone associated with the second device;
decoding the network address from the first audio signal on the second device;
transmitting a connection request from the second device to the first device;
in response to a confirmation of connection received by the first device, transmitting a second audio signal via a loudspeaker associated with the second device, wherein the second audio signal comprises an audio signal encoded with network credentials of the network;
detecting the second audio signal via a microphone associated with the third device; and
decoding the network credentials from the second audio signal on the third device.

2. The method of claim 1, wherein the network address of the third device comprises a MAC ID of the third device.

3. The method of claim 1, wherein the network credentials comprise an SSID and password of the network.

4. The method of claim 1, wherein the first and second audio signals are audible signals that contain inaudible watermarks.

5. The method of claim 1, wherein the first and second audio signals are audible signals that contain inaudible watermarks, and wherein the network address of the third device comprises a MAC ID of the third device.

6. The method of claim 1, further comprising: if an acknowledgement audio signal from the third device is not detected via a microphone associated with the first device after a predetermined period of time, outputting a volume increase prompt from the first device.

7. The method of claim 5, wherein the volume increase prompt is output to a display device associated with the first device.

8. The method of claim 1, wherein connecting the first device to the second device over the network comprises:
connecting the first device to the network;
transmitting a third audio signal via a loudspeaker associated with the first device, wherein the third audio signal comprises an audio signal encoded with the network credentials;
detecting the third audio signal via a microphone associated with the second device; and
decoding the network credentials from the third audio signal on the second device.

9. The method of claim 8, where the third audio signal is an audible signal with inaudible watermarks.

10. The method of claim 8, further comprising: if an acknowledgement audio signal from the second device is not detected via a microphone associated with the first device after a predetermined period of time, outputting a volume increase prompt from the first device.

11. The method of claim 10, wherein the volume increase prompt is output to a display device associated with the first device.

12. The method of claim 1, wherein the first device comprises a mobile device, the method further comprising estimating a location of the third device.

13. A system, comprising:
a first device comprising a first loudspeaker, a first microphone, and a first processor;
a second device comprising a second loudspeaker, a second microphone, and a second processor;
a third device comprising a third loudspeaker, a third microphone, and a third processor;
wherein the first device and the second device are connected to a network;
wherein the third processor is configured to transmit a first audio signal via the third loudspeaker, wherein the first audio signal comprises an audio signal encoded with a network address of the third device;
wherein the second processor is configured to:
detect the first audio signal via the second microphone;
decode the network address from the first audio signal;
transmit a connection request to the first device;
in response to a confirmation of connection received by the first device, transmit a second audio signal via the second loudspeaker, wherein the second audio signal comprises an audio signal encoded with network credentials of the network;
wherein the third processor is further configured to:
detect the second audio signal via the third microphone; and
decode the network credentials from the second audio signal.

14. The system of claim 13, wherein the second processor is further configured to estimate a location of the third device.

15. The system of claim 13, wherein the first and second audio signals are audible signals with inaudible watermarks, or wherein the network address of the third device comprises a MAC ID of the third device and wherein the network credentials comprise an SSID and password of the network.
